# EUROPEAN PATENT SPECIFICATION

(11) **EP 2 815 091 B1**
(45) Date of publication and mention of the grant of the patent: **17.05.2017**
(21) Application number: 13749925.7
(22) Date of filing: 07.02.2013
(51) Int. Cl.: F01N 13/08, F01N 13/14, F01N 3/05, F01N 3/22, F01N 3/021

(54) **EXHAUST ASSEMBLY**
ABGASBAUGRUPPE
ENSEMBLE D'ÉCHAPPEMENT

(30) Priority: 14.02.2012 US 201213396115
(43) Date of publication of application: 24.12.2014
(73) Proprietor: Deere & Company, Moline, IL 61265 (US)
(72) Inventor: GARDNER, Jeffrey, L., Hudson, IA 50643 (US); BROWN, Brian, T., Waterloo, IA 50701 (US); KEYS II, Gary, S., Cedar Falls, IA 50613 (US)
(74) Representative: Dehnhardt, Florian Christopher
(86) International application number: PCT/US2013/025075
(87) International publication number: WO 2013/122806

(56) References cited:
- EP-A2- 1 911 944
- DE-A1- 19 623 996
- DE-B- 1 099 799
- JP-A- H0 814 041
- US-A- 5 174 113
- US-A1- 2007 012 495
- US-A1- 2008 196 408
- US-A1- 2010 000 205
- US-A1- 2010 146 956
- US-A1- 2011 192 153
- US-B1- 7 051 524

## Description

The present invention relates to an exhaust assembly. The exhaust assembly comprises an exhaust pipe having an inlet end and an outlet end. A first venturi member includes a larger uniform diameter cylindrical portion forming an inlet end which is adapted to receive exhaust gas from a combustion engine, and includes a smaller uniform diameter cylindrical portion forming an outlet end which is received by the inlet end of the exhaust pipe. The inlet end of the exhaust pipe is spaced apart from and surrounds the outlet end of the first venturi member.

Such exhaust assembly is known from DE 10 99 799 B. The assembly includes an exhaust pipe which extends into an extension pipe such in that a jet pump for adding ambient air to an exhaust stream is formed. A downstream section of the extension pipe is surrounded by an air duct, wherein pressurized air from an engine compartment flows through an annular gap between extension pipe and air duct. Both air streams are separated from each other until they are discharged at a common outlet into the environment.

To meet emissions regulations, vehicles, such as agricultural tractors have been provided exhaust assemblies which include an exhaust filter which performs a regeneration process. Such an exhaust assembly can produce elevated exhaust gas temperatures during idle conditions. It is desired to provide an exhaust assembly which produces lower exhaust gas temperatures. A shielded pipe exiting into atmosphere alone will not have adequate gas mixing in order to lower the exhaust gas temperatures. It is desired to have an exhaust assembly which allows improved cooling of the exhaust gases.

These and other objects are achieved by the present invention, wherein an exhaust assembly is provided. The exhaust assembly comprises an exhaust pipe having an inlet end and an outlet end. A first venturi member includes a larger uniform diameter cylindrical portion forming an inlet end which is adapted to receive exhaust gas from a combustion engine, and includes a smaller uniform diameter cylindrical portion forming an outlet end which is received by the inlet end of the exhaust pipe. The inlet end of the exhaust pipe is spaced apart from and surrounds the outlet end of the first venturi member. A second venturi member has a smaller diameter inlet end receiving the outlet end of the exhaust pipe, and has a larger diameter outlet end opening to the atmosphere. The inlet end of the second venturi member is spaced apart from and surrounds the outlet end of the exhaust pipe, wherein a mixing chamber for combining ambient air with exhaust gases is formed inside the second venturi member.

For a complete understanding of the objects, techniques, and structure of the invention reference should be made to the following detailed description and accompanying drawings, wherein similar components are designated by identical reference numerals:
- Fig. 1: is a perspective view of an exhaust assembly embodying the invention,
- Fig. 2: is a sectional view of the exhaust assembly of Fig. 1,
- Fig. 3: is a detailed sectional view of a first venturi member of the exhaust assembly of Fig. 1,
- Fig. 4: is a detailed sectional view of a second venturi member of the exhaust assembly of Fig. 1,
- Fig. 5: is a perspective view of the second venturi member of Fig. 4, and
- Fig. 6: is a perspective view of the first venturi member of Fig. 3.

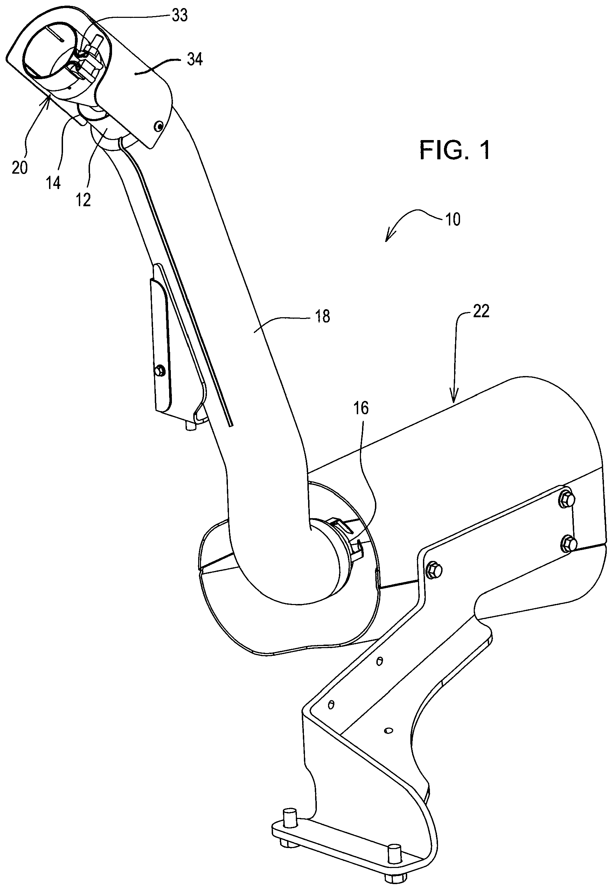

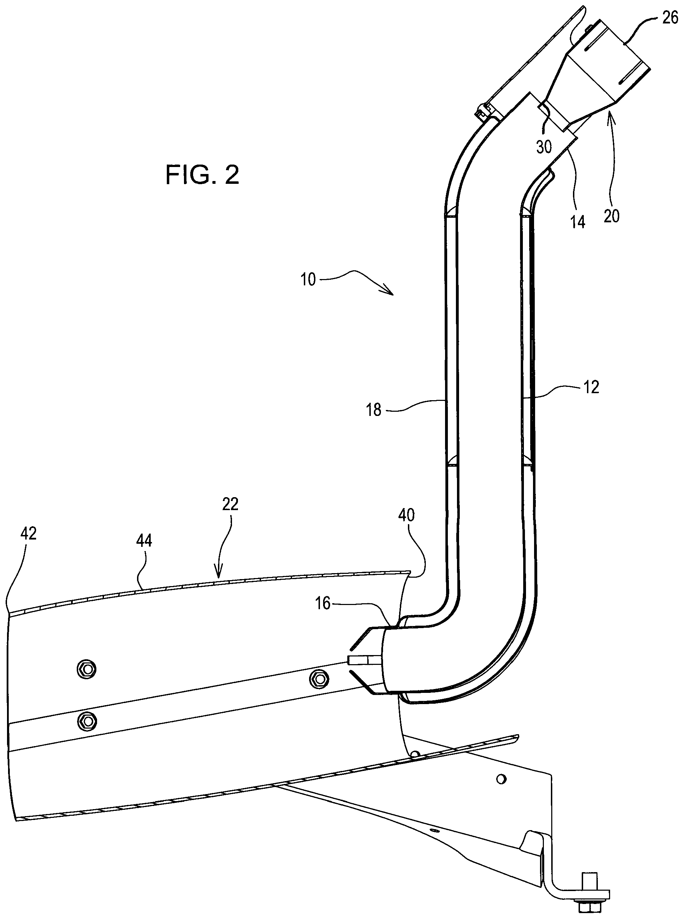

Referring to Figs. 1 and 2, an exhaust assembly 10 includes an exhaust pipe 12 having an inlet end 14 and an outlet end 16. Most of the exhaust pipe 12 is surrounded by a shield pipe 18, while the inlet end 14 and the outlet end 16 of the exhaust pipe 12 project out of the ends of the shield pipe 18.

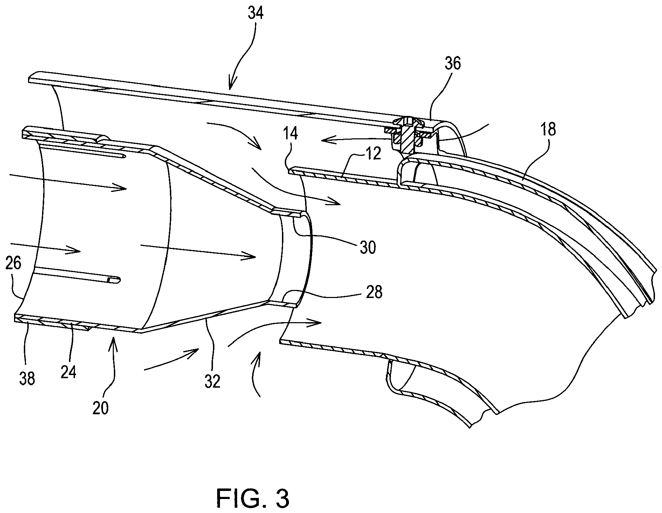

The exhaust assembly 10 also includes an inlet or first venturi member 20 and an outlet or second venturi member 22. As best seen in Figs. 2 and 3, first venturi member 20 includes a larger uniform diameter cylindrical portion 24 forming an inlet end 26 and a smaller uniform diameter cylindrical portion 28 forming an nozzle or outlet end 30. Larger and smaller uniform diameter cylindrical portions 24 and 28 are joined together by a tapered frustoconical portion 32. Outlet end 30 is spaced apart from and received by inlet end 14 of exhaust pipe 12. The outlet end 30 is centered in the inlet end 14 of the exhaust pipe 12 and is held in that position by a clamp 33 (see Fig. 1) which is attached to an combustion engine (not shown). There need not be a direct rigid connection between the first venturi member 20 and the exhaust pipe 12.

An annular space is formed between the outlet end 30 of the first venturi member 20 and the inlet end 14 of exhaust pipe 12. When exhaust gas flows through first venturi member 20 and into the inlet end 14 of exhaust pipe 12, a venturi effect draws ambient air into the exhaust pipe 12 to join with and cool the exhaust gases.

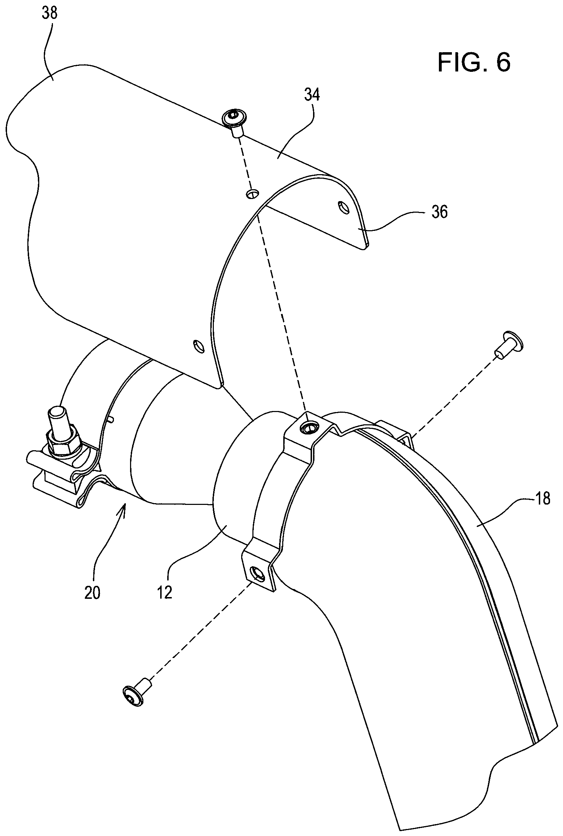

As best seen in Figs. 1 and 6, a shield member 34 has a downstream or first end 36 attached by three screws to an outer surface of the shield pipe 18 and an upstream or second end 38. The shield member 34 partially surrounds the first venturi member 20 and the inlet end 14 of exhaust pipe 12, and acts as a cover to prevent debris from entering the annular space between first venturi member 20 and the inlet end 14 of exhaust pipe 12.

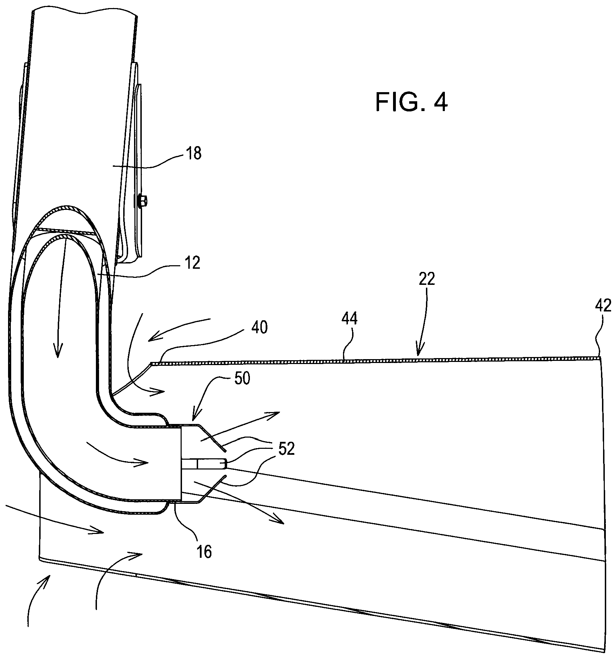

As best seen in Figs. 2 and 4, the second venturi member 22 has an inlet end formed by a smaller diameter inlet end 40 which is spaced apart from and which receives the outlet end 16 of the exhaust pipe 12. The second venturi member 22 also has an outlet end formed by a larger diameter outlet end 42 which opens to the atmosphere. Smaller diameter inlet end 40 and larger diameter oulet end 42 are joined together by a tapered body 44. The first and second venturi members 20 and 22 operate to combine ambient air with exhaust gases.

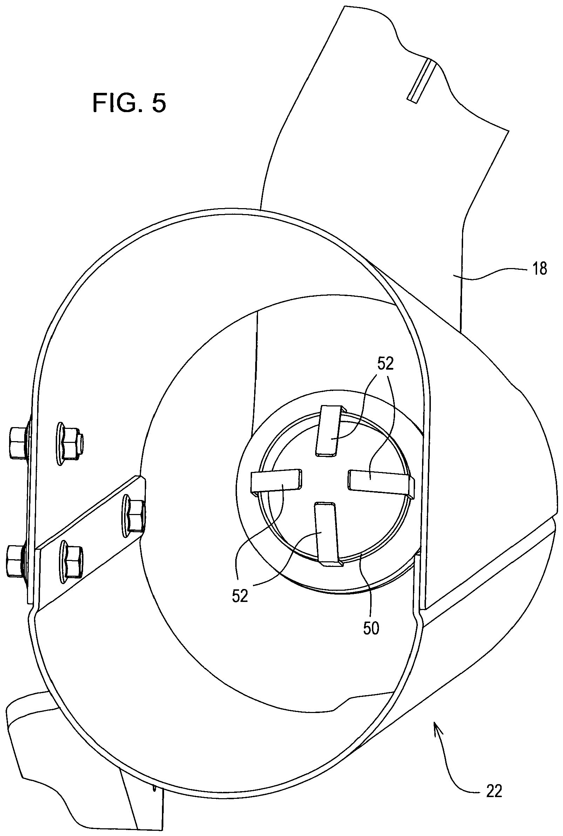

As best seen in Figs. 4 and 5, a mixer or diffuser 50 is mounted at the outlet end 16 of the exhaust pipe 12 and projects into and is received by the smaller diameter inlet end 40 of the second venturi member 22. The diffuser 50 has a plurality of tabs 52 which projects downstream and radially inwardly into the stream of exhaust gas as it exits the exhaust pipe 12. The diffuser 50 diffuses the exhaust gas and ambient air mixture which flows out of the outlet end 16 of exhaust pipe 12 and further mixes it with additional ambient air which flows into the smaller diameter inlet end 40 of second venturi member 22.

The result is an exhaust system 10 which includes a first venturi member 20 at the inlet end 14 of the exhaust pipe 12 together with a second venturi member 22 and mixing chamber at the outlet end 16 of the exhaust pipe 12. The exhaust gas flowing through the primary venturi will create a low pressure zone to draw in ambient air between the exhaust pipe 12 and the inserted nozzle 30 for the initial exhaust gas cooling. A second venturi member 22 downstream near the exhaust outlet 16 will allow additional cooling of the exhaust gas as ambient air is drawn into the mixing chamber formed inside the second venturi member 22 formed by tapered body 44. The exhaust gas passes through diffuser 50 which is attached to the outlet end 16 of the exhaust pipe 12 which will blend the exhaust gas with surrounding ambient air within the mixing chamber. This reduces the temperatures of the exhaust gas before its discharge into the atmosphere to an acceptable level.

The exhaust assembly 10 provides a simple design which achieves a temperature goal within a short distance and opens to the atmosphere by outlet end 42 of second ventury member 22 within the height of a rear axle tractor centerline.

## Claims

1. An exhaust assembly, the exhaust assembly (10) comprising an exhaust pipe (12) having an inlet end (14) and an outlet end (16); a first venturi member (20) including a larger uniform diameter cylindrical portion (24) forming an inlet end (26), the inlet end (26) being adapted to receive exhaust gas from a combustion engine, and including a smaller uniform diameter cylindrical portion (28) forming an outlet end (30), the outlet end (30) being received by the inlet end (14) of the exhaust pipe (12), the inlet end (14) of the exhaust pipe (12) being spaced apart from and surrounding the outlet end (30) of the first venturi member (20), **characterized by** a second venturi member (22) having a smaller diameter inlet end (40) receiving the outlet end (16) of the exhaust pipe (12), and having a larger diameter outlet end (42) opening to the atmosphere, the inlet end (40) of the second venturi member (22) being spaced apart from and surrounding the outlet end (16) of the exhaust pipe (12), wherein a mixing chamber for combining ambient air with exhaust gases is formed inside the second venturi member (22).

2. The exhaust assembly according to claim 1, **characterized in that** a diffuser (50) is mounted at the outlet end (16) of the exhaust pipe (12).

3. The exhaust assembly according to claim 2, **characterized in that** the diffuser (50) projects into and is received by the inlet end (40) of the second venturi member (22).

4. The exhaust assembly according to claims 1 to 3, **characterized by** a shield pipe (18) surrounding a portion of the exhaust pipe (12).

5. The exhaust assembly according to claims 1 to 4, **characterized by** a shield member (34) covering a portion of the first venturi member (20).

6. The exhaust assembly according to claim 5, **characterized in that** the shield member (34) has a first end (36) mounted to the shield pipe (18).

7. The exhaust assembly according to claims 1 to 6, **characterized in that** the first and second venturi members (20, 22) operate to mix ambient air with exhaust gases.

## Patentansprüche

1. Abgasbaugruppe, wobei die Abgasbaugruppe (10) ein Abgasrohr (12) mit einem Einlassende (14) und einem Auslassende (16); ein erstes Venturibauteil (20) aufweist, welches einen zylindrischen Abschnitt (24) mit einem größeren gleichförmigen Durchmesser, der ein Einlassende (26) bildet, umfasst, wobei das Einlassende (26) dafür angepasst ist, Abgas von einem Verbrennungsmotor aufzunehmen, und einen zylindrischen Abschnitt (28) mit einem kleineren gleichförmigen Durchmesser, der ein Auslassende (30) bildet, umfasst, wobei das Auslassende (30) von dem Einlassende (14) des Abgasrohrs (12) aufgenommen wird, wobei das Einlassende (14) des Abgasrohrs (12) von dem Auslassende (30) des ersten Venturibauteils (20) beabstandet ist und dieses umgibt, **gekennzeichnet durch** ein zweites Venturibauteil (22), welches ein Einlassende (40) mit einem kleineren Durchmesser aufweist, welches das Auslassende (16) des Abgasrohrs (12) aufnimmt, und welches ein sich zur Atmosphäre öffnendes Auslassende (42) mit einem größeren Durchmesser aufweist, wobei das Einlassende (40) des zweiten Venturibauteils (22) von dem Auslassende (16) des Abgasrohrs (12) beabstandet ist und dieses umgibt, wobei eine Mischkammer zum Kombinieren von Umgebungsluft mit Abgasen innerhalb des zweiten Venturibauteils (22) ausgebildet ist.

2. Abgasbaugruppe nach Anspruch 1, **dadurch gekennzeichnet, dass** ein Diffusor (50) an einem Auslassende (16) des Abgasrohrs (12) montiert ist.

3. Abgasbaugruppe nach Anspruch 2, **dadurch gekennzeichnet, dass** ein Diffusor (50) in das Einlassende (40) des zweiten Venturibauteils (22) hinein ragt und von diesem aufgenommen wird.

4. Abgasbaugruppe nach Ansprüchen 1 bis 3, **gekennzeichnet durch** ein Abschirmrohr (18), welches einen Abschnitt des Abgasrohrs (12) umgibt.

5. Abgasbaugruppe nach Ansprüchen 1 bis 4, **gekennzeichnet durch** ein Abschirmrohr (34), welches einen Abschnitt des ersten Venturibauteils (20) abdeckt.

6. Abgasbaugruppe nach Anspruch 5, **dadurch gekennzeichnet, dass** ein Abschirmelement (34) ein erstes Ende (36) aufweist, welches an dem Abschirmrohr (18) montiert ist.

7. Abgasbaugruppe nach Ansprüchen 1 bis 6, **dadurch gekennzeichnet, dass** das erste und zweite Venturibauteil (20, 22) bewirken, Umgebungsluft mit Abgasen zu mischen.

## Revendications

1. Ensemble d'échappement, l'ensemble d'échappement (10) comprenant un tuyau d'échappement (12) présentant une extrémité d'entrée (14) et une extrémité de sortie (16); un premier élément venturi (20) comprenant une partie cylindrique de plus grand diamètre uniforme (24) formant une extrémité d'entrée (26), l'extrémité d'entrée (26) étant apte à recevoir un gaz d'échappement en provenance d'un moteur à combustion, et comprenant une partie cylindrique de plus petit diamètre uniforme (28) formant une extrémité de sortie (30), l'extrémité de sortie (30) étant reçue par l'extrémité d'entrée (14) du tuyau d'échappement (12), l'extrémité d'entrée (14) du tuyau d'échappement (12) étant espacée de et entourant l'extrémité de sortie (30) du premier élément venturi (20), **caractérisé par** un second élément venturi (22) présentant une extrémité d'entrée de plus petit diamètre (40) qui reçoit l'extrémité de sortie (16) du tuyau d'échappement (12), et présentant une extrémité de sortie de plus grand diamètre (42) s'ouvrant vers l'atmosphère, l'extrémité d'entrée (40) du second élément venturi (22) étant espacée de et entourant l'extrémité de sortie (16) du tuyau d'échappement (12), dans lequel une chambre de mélange pour combiner l'air ambiant avec des gaz d'échappement est formée à l'intérieur du second élément venturi (22).

2. Ensemble d'échappement selon la revendication 1, **caractérisé en ce qu'**un diffuseur (50) est monté à l'extrémité de sortie (16) du tuyau d'échappement (12).

3. Ensemble d'échappement selon la revendication 2, **caractérisé en ce que** le diffuseur (50) fait saillie dans et est reçu par l'extrémité d'entrée (40) du second élément venturi (22).

4. Ensemble d'échappement selon les revendications 1 à 3, **caractérisé par** un tube de protection (18) qui entoure une partie du tuyau d'échappement (12).

5. Ensemble d'échappement selon les revendications 1 à 4, **caractérisé par** un élément de protection (34) couvrant une partie du premier élément venturi (20).

6. Ensemble d'échappement selon la revendication 5, **caractérisé en ce que** l'élément de protection (34) présente une première extrémité (36) montée sur le tube de protection (18).

7. Ensemble d'échappement selon les revendications 1 à 6, **caractérisé en ce que** les premier et second éléments venturi (20, 22) fonctionnent pour mélanger l'air ambiant avec des gaz d'échappement.
